**Europäisches Patentamt**

**European Patent Office**

**Office européen des brevets**

(19)

(11) Veröffentlichungsnummer: **0 108 378**
**A1**

(12) # EUROPÄISCHE PATENTANMELDUNG

(21) Anmeldenummer: **83110907.9**

(22) Anmeldetag: **02.11.83**

(51) Int. Cl.³: **E 03 F 5/10**
**F 16 K 31/30, G 05 D 7/01**

(30) Priorität: **05.11.82 DE 3240902**

(43) Veröffentlichungstag der Anmeldung:
**16.05.84 Patentblatt 84/20**

(84) Benannte Vertragsstaaten:
**AT BE CH FR GB LI NL**

(71) Anmelder: **Steinhardt, Lothar**
**Panoramastrasse 44**
**D-6204 Taunusstein 2(DE)**

(72) Erfinder: **Steinhardt, Lothar**
**Panoramastrasse 44**
**D-6204 Taunusstein 2(DE)**

(74) Vertreter: **Rasper, Joachim, Dr.**
**Bierstadter Höhe 22**
**D-6200 Wiesbaden(DE)**

(54) **Abflussmengenregler.**

(57) Bei einem Abflußmengenregler für Ausläufe aus Flüssigkeitsbehältern, insbesondere Regenrückhalteräumen, bei dem eine Blende über die Auslauföffnung geführt und mittels Übertragungselementen mit einem Schwimmer bewegungsschlüssig verbunden ist, ist diese Blende (1) in vertikaler Richtung vor und über der Auslauföffnung (2) geführt, wobei sie über vertikal sich bewegende Führungselemente (3) mit einer oberhalb der Auslauföffnung auf einer ortsfesten Achse (5) drehbar angeordneten Steuerscheibe (4) verbunden ist, die andererseits mittels Übertragungselementen (9) mit dem Schwimmer (8) verbunden ist (Fig. 1).

EP 0 108 378 A1

./...

FIGUR 1

Abflußmengenregler

0108378

Beschreibung

Die Erfindung betrifft einen Abflußmengenregler für Flüssigkeitsbehälter, insbesondere für Regenrückhalteräume.

Bei Regenrückhaltungen und anderen Speicherräumen wird die ablaufende Wassermenge im allgemeinen durch Veränderung der Querschnittsfläche des Auslaufrohres geregelt. Das Abblenden der Auslauföffnung darf jedoch nicht direkt proportional der Wasserhöhe erfolgen, sondern muß mit zunehmender Stauhöhe gesteuert werden in Richtung auf eine weniger rasche Abblendung.

Derartige Regler sind bekannt, beispielsweise aus der DE-PS 25 23 942 und der DE-OS 30 07 035. Bei beiden bekannten Vorrichtungen wird eine relativ große Drosselblende mittels eines aufwendigen Gestänges vor die Auslauföffnung des Beckens geschwenkt, wobei die eine Kante der Drosselblende eine Steuerkurve darstellt. Beide bekannten Regler haben den Nachteil, daß wegen der Größe und Gestalt der Reglerelemente Schmutzstoffe eingeklemmt werden können, und daß die Gestalt der Restöffnung bei maximaler Abblendung ungünstig ist, weil am Ende des Abblendvorganges eine nahezu horizontale Blendenkante wirksam wird; die Restöffnungs-Höhe wird dadurch negativ gestaltet. Auch ist eine Serienfertigung bei beiden bekannten Reglern nicht möglich, weil für jeden Beckentyp die Blendengestalt und -größe eigens berechnet und konstruiert werden muß, wobei sich auch, da alles auf den Durchmesser der Auslauföffnung bezogen ist, das Gestänge in seiner Verhältnismäßigkeit jedesmal ändert.

Ziel der vorliegenden Erfindung ist daher ein Abflußmengenregler, der in einfacherer Weise eine Regelung der Öffnungsfläche des Auslaufrohres ermöglicht, der das Einklemmen von Schmutzstoffen vermeidet, und der serienmäßig hergestellt werden kann. Dieses Ziel wird mit einem Abflußmengenregler gemäß den Patentansprüchen erreicht.

Der neue Regler besteht im wesentlichen aus einer Blende, die in vertikaler Richtung vor der Auslauföffnung geführt ist, und aus einer oberhalb der Auslauföffnung auf einer ortsfesten Achse drehbar gelagerten Steuerscheibe. Die Blende ist mit der Steuerscheibe über Führungselemente, beispielsweise über eine senkrecht sich bewegende Führungsstange bewegungsschlüssig verbunden, und die Steuerscheibe wird von einem im Becken angeordneten Schwimmer, der über Übertragungselemente, beispielsweise über ein Gestänge mit der Steuerscheibe form- oder bewegungsschlüssig verbunden ist, angetrieben.

Die Blende ist so bemessen, daß ihre Breite die der Auslauföffnung unwesentlich übersteigt, und sie ist an ihrer Unterkante vorzugsweise nach oben konkav ausgeschnitten. Dank dieser einfachen Gestalt, Anordnung und Arbeitsweise ist es auch möglich, die Blende innerhalb eines geschlos-senen Systems und in diesem Falle sogar hinter der Wand des Rückhalteraumes anzuordnen.

Der Hub der Führungsstange (und damit die Abblendung der Auslauföffnung) muß, wie eingangs erläutert wurde, so gesteuert werden, daß mit zunehmender Stauhöhe eine weniger schnelle Abblendung erfolgt. Zu diesem Zwecke wird der Hub der Führungsstange über eine Steuerscheibe geregelt, die von einem Schwimmer angetrieben wird.

Gemäß einer Ausführungsform der Erfindung weist die in einer vertikalen Ebene sich drehende Steuerscheibe eine entsprechende Steuerkurve an ihrer Kante auf. Die Führungsstange, an deren unterem Ende die Blende hängt, ist in diesem Falle vor oder hinter der Steuerscheibe vorbeigeführt, und das umgebogene obere Ende der Führungsstange reitet auf dieser Steuerkurve oder wird in einem der Steuerkurve entsprechenden Scheibenschlitz geführt.

Der Antrieb der Steuerscheibe erfolgt über die Stange des Schwimmers, wobei das Ende der Schwimmerstange mittelbar über Unter-/Übersetzungen oder unmittelbar an der Steuerscheibe ortsfest angeordnet sein kann oder an einer auf der jeweiligen Drehachse gleitenden Hülse angreifen kann. Dadurch wird eine wünschenswerte Beabstandung des Schwimmers von der Auslaufwand ermöglicht. Der gleiche Effekt kann auch durch Abwinkelung der Schwimmerstange ermöglicht werden.

Für hohe Wasserstände kann eine Regelung vorgesehen werden, bei der mehrere voneinander unabhängige Schwimmer mit übereinander angeordneten Steuerscheiben zusammenwirken. Die Führungsstange ist in diesem Falle entsprechend verlängert und weist in Höhe der Steuerkurve jeder Steuerscheibe einen Kurvenreiter auf.

Je ein Schwimmer ist je einer Steuerscheibe zugeordnet, und die Steuerkurven sind (unterschiedlich) so konstruiert, daß der Hub der Führungsstange wasserstandsabhängig in der berechneten Weise geregelt wird.

Zum Schutze gegen mechanische Angriffe können die Steuer- und/oder Führungselemente mit geeigneten Abdeckungen versehen werden, wie beispielsweise einer über der Steuerscheibe angeordneten Schutzhaube.

Die Erfindung wird durch die Zeichnung erläutert, in welcher eine bevorzugte Ausführungsform dargestellt ist. Es zeigen:

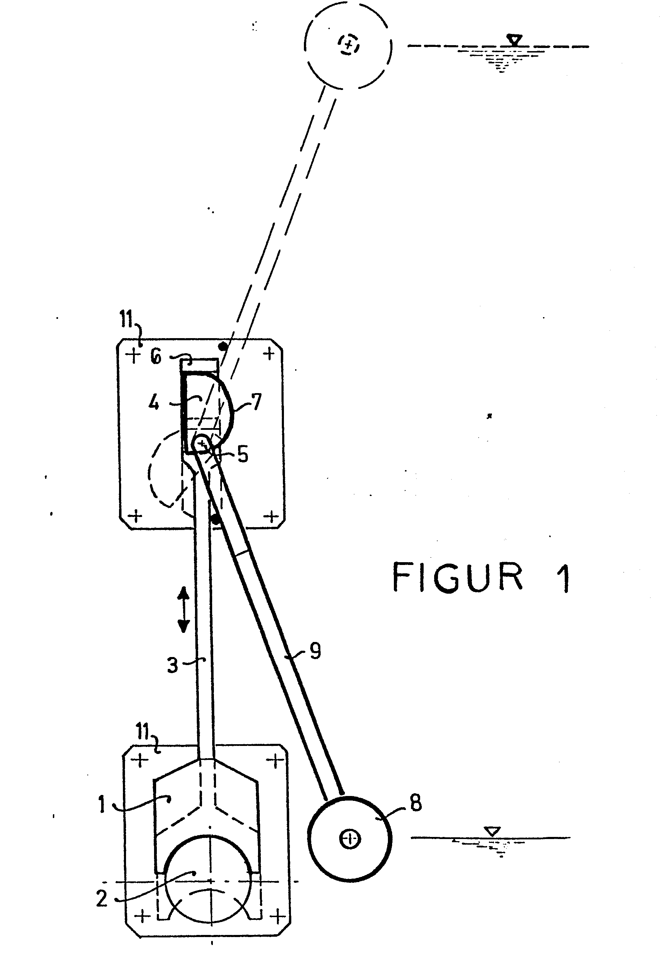

Figur 1 einen erfindungsgemäßen Abflußmengenregler in Draufsicht, und

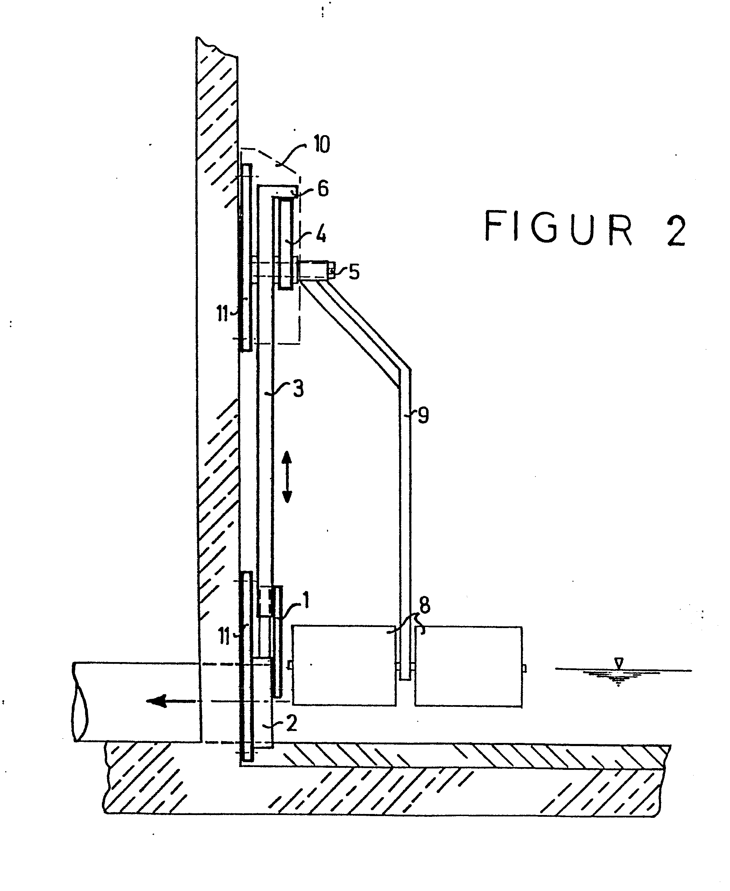

Figur 2 den gleichen Regler im seitlichen Schnitt.

Wie die Zeichnung erkennen läßt, besteht der Regler aus einer Blende 1, die über die Auslauföffnung 2 geführt und über eine Führungsstange 3 mit einer Steuerscheibe 4 bewegungsschlüssig verbunden ist, welche auf einer ortsfesten Achse 5 drehbar gelagert ist. Die Führungsstange 3 weist eine Abwinkelung 6 auf, mittels welcher sie auf der Steuerscheibe 4 reitet, deren Kante eine Steuerkurve 7 bildet. Ein Schwimmer 8 ist über einen Hebel 9 mit der Steuerscheibe 4 formschlüssig verbunden. Über der Steuerscheibe ist eine Schutzhaube 10 angeordnet.

Alle dargestellten Teile sind auf einer gemeinsamen großen oder zwei kleineren Grundplatten 11 montiert.

Abflußmengenregler

Patentansprüche:

1. Abflußmengenregler für Ausläufe aus Flüssigkeitsbehältern, insbesondere Regenrückhalteräumen, mit einer Blende, die über die Auslauföffnung geführt und über Übertragungselemente mit einem Schwimmer bewegungsschlüssig verbunden ist,

dadurch gekennzeichnet, daß diese Blende in vertikaler Richtung vor und über der Auslauföffnung geführt ist,

daß die Blende über vertikal sich bewegende Führungselemente, wie Stangen, Ketten, Seile o.ä. mit einer oberhalb der Auslauföffnung drehbar auf einer ortsfesten Achse vertikal angeordneten Steuerscheibe bewegungsschlüssig verbunden ist, und

daß die Steuerscheibe über geeignete Übertragungselemente, wie Hebel, Stangen, Zahnstangen o.ä., mit dem Schwimmer formschlüssig oder über zusätzliche Unter-/Übersetzungen bewegungsschlüssig verbunden ist.

2. Regler nach Anspruch 1, dadurch gekennzeichnet, daß die Blende so bemessen ist, daß ihre Breite die der Auslauföffnung nicht wesentlich übersteigt.

3. Regler nach Anspruch 1 oder 2, dadurch gekennzeichnet, daß diese zwischen dieser Blende und dieser Steuerscheibe vertikal sich bewegenden Führungselemente aus einer Führungsstange bestehen.

4. Regler nach einem der Ansprüche 1 bis 3, dadurch gekennzeichnet, daß diese den Schwimmer mit der Steuerscheibe verbindenen Übertragungselemente aus einem Schwimmerhebel bestehen.

5. Regler nach Anspruch 3, dadurch gekennzeichnet, daß die Führungsstange vor oder hinter der Steuerscheibe vorbeigeführt ist und mit einer an ihrem oberen Ende angeordneten Anwinkelung auf der eine Steuerkurve bildenden, oberen Kante der Steuerscheibe reitet oder in einem der Steuerkurve entsprechenden, in die Steuerscheibe eingeschnittenen Scheibenschlitz geführt ist.

6. Regler nach Anspruch 4, dadurch gekennzeichnet, daß der Schwimmerhebel mit der Steuerscheibe unmittelbar formschlüssig verbunden ist.

7. Regler nach einem der Ansprüche 1 bis 4, dadurch gekennzeichnet, daß der Schwimmerhebel mit der Steuerscheibe über Unter-/Übersetzungen bewegungsschlüssig verbunden ist.

8. Regler nach einem der Ansprüche 1 bis 7, dadurch gekennzeichnet, daß mehrere Steuerscheiben mit entsprechend zugeordnetem Schwimmerantrieb übereinander angeordnet sind.

9. Regler nach einem der Ansprüche 1 bis 8, dadurch gekennzeichnet, daß die Blende innerhalb eines geschlossenen Systems und gegebenenfalls hinter der Wand des Rückhalteraumes angeordnet ist.

FIGUR 1

0108378

FIGUR 2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-C- 615 285 (GANDOLFI)<br><br>* Seite 1, Zeilen 38-62; Seite 2; Figuren 1,2 * | 1,2,4, 6 | E 03 F 5/10<br>F 16 K 31/30<br>G 05 D 7/01 |
| Y,D | DE-A-3 007 035 (GIEHL)<br>* Seiten 42-45; Figuren 1,2 * | 1-4 | |
| Y | FR-A- 349 749 (TOZIER)<br>* Seiten 1,2; Figur 1 * | 1,3-5 | |
| A | US-A-1 641 240 (STOCKHOLDER) | | |
| A,D | DE-B-2 523 942 (GLEINSER) | | |

RECHERCHIERTE SACHGEBIETE (Int. Cl. 3)

E 03 F
F 16 K

Der vorliegende Recherchenbericht wurde für alle Patentansprüche erstellt.

| Recherchenort | Abschlußdatum der Recherche | Prüfer |
|---|---|---|
| DEN HAAG | 09-02-1984 | HANNAART J.P. |